# EUROPÄISCHE PATENTANMELDUNG

(11) **EP 3 454 283 A1**
(43) Veröffentlichungstag der Anmeldung: **13.03.2019**
(21) Anmeldenummer: 17190178.8
(22) Anmeldetag: 08.09.2017
(51) Int. Cl.: G06Q 30/06, G06Q 10/02, B60P 3/00, G06Q 10/04

(54) **VORRICHTUNG, COMPUTERPROGRAMMPRODUKT, SIGNALFOLGE UND VERFAHREN ZUR KONFIGURATION EINER DIENSTLEISTUNGSSPEZIFISCH AUSGESTALTETEN KABINE**

(71) Anmelder: VOLKSWAGEN AKTIENGESELLSCHAFT, 38440 Wolfsburg (DE)
(72) Erfinder: HÖFLICH, Sebastian, 23570 Lübeck (DE); RÖMMELER, Volker, 38154 Lauingen am Elm (DE); WEHINGER, Jan, 38114 Braunschweig (DE)

(57) **Zusammenfassung**

Es werden eine Vorrichtung, ein Computerprogrammprodukt, eine Signalfolge sowie ein Verfahren zur Konfiguration einer dienstleistungsspezifisch ausgestalteten Kabine, nachfolgend "CAB" genannt, für ein temporär aus einer Fahrlafette und der CAB zusammengesetztes Servicemobil zur Erbringung einer Dienstleistung während der Fahrt des Servicemobils vorgeschlagen. Das Verfahren umfasst die Schritte:
- Ermitteln einer Eingabe eines Anwenders (56) zur Auswahl einer CAB-Vorlage (50) und im Ansprechen darauf
- automatisches Definieren der CAB-Vorlage (50) als Basis einer weiteren Konfiguration der CAB.

## Beschreibung

### Stand der Technik

Die vorliegende Erfindung betrifft eine Vorrichtung, ein Computerprogrammprodukt, eine Signalfolge sowie ein Verfahren zur Konfiguration einer dienstleistungsspezifisch ausgestalteten Kabine (CAB) für ein temporär aus einer Fahrlafette und der CAB zusammengesetztes Servicemobil zur Erbringung einer Dienstleistung während der Fahrt. Insbesondere betrifft die vorliegende Erfindung eine Effizienzsteigerung beim Entwurf erfindungsgemäßer CABs sowie die Möglichkeit, Aufwendungen beim CAB Entwurf wirtschaftlich attraktiver zu gestalten.

Die Fortentwicklung des Individualverkehrs schreitet derzeit rasch voran. Einerseits werden gemeinsam verwendete Fortbewegungsmittel (Car-Sharing, Pool-Fahrzeuge, etc.) immer stärker nachgefragt und professioneller angeboten. Andererseits schreitet auch die Automatisierung des Personenindividualverkehrs immer rascher voran, so dass die Insassen entsprechender Fahrzeuge die Reisezeit anderweitig nutzen können.

Dienstleistungen hingegen werden bis heute üblicherweise in stationären Einrichtungen (z.B. "Ladengeschäften") angeboten. Anbieter stationärer Dienstleistungen stehen bislang vor den Problemen, dass sie ausschließlich hohe Umsätze in teuren Toplagen erzielen können, die Skalierung schwierig ist, Mietverträge eine langfristige Ortsbindung bewirken und die Investitionskosten und das unternehmerische Risiko hoch sind.

Endkunden, welche die Dienstleistung gern erleben wollen, haben mitunter lange Fahrwege und hohe Kosten für die stationären Dienstleistungen auf sich zu nehmen. Folglich verbringt der Endkunde nicht nur die Fahrzeit zum Arbeitsplatz, sondern zusätzlich die Zeit zum jeweiligen Dienstleister (z.B. Restaurant, Anwalt, Behörde) im Fahrzeug. Aktuell verbringt ein Deutscher ca. 60 Min. pro Tag im Auto. Zudem können viele ältere Menschen nicht mehr fahren. Mit dem autonomen Fahren ist das wieder möglich.

Spartenspezifisch sind auch Ansätze bekannt, bei welchen die Dienstleistung zum Kunden kommt. Beispielsweise werden Frisierdienstleistungen zu Hause angeboten oder fahrende Einzelhändler (der "Eiermann") machen Station in Wohngegenden, um dort Waren abzusetzen.

Vereinzelt ist bereits die Erbringung von Dienstleistung für Fahrgäste bekannt. Beispielsweise können gastronomische Dienstleistungen in Zügen des Fernverkehrs in Anspruch genommen oder audiovisuelle Inhalte ("Bord-Kino") konsumiert werden.

DE 20 2015 106 556 U1 offenbart eine fahrbare Vorrichtung zur mobilen Bereitstellung unterschiedlicher Serviceleistungen in modularer Bauweise, umfassend eine Antriebseinheit, Energiespeichereinheit und/oder dazugehörige Elektronik. Ein austauschbares Servicemodul, welches beispielsweise ein Zapfhahnmodul, ein Kühlmodul, ein Eismodul oder eine Nassstrecke umfassen kann, ist reversibel über korrespondierende Arretierungspunkte mit einem Fahrgestell verbunden.

UBER nutzt mittlerweile Fahrradkuriere, um Essen direkt ins Fahrzeug zu liefern. So können zumindest die Ergebnisse gastronomischer Dienstleitungen bei minimalen Mehrkosten in herkömmlichen Fahrzeugen genossen werden. Die Fahrzeuge selbst hingegen sind nicht service-spezifisch ausgestaltet. Zudem wird die Dienstleistung nicht im Fahrzeug erbracht, sondern endet an der Fahrzeugtür mit der Übergabe des Essens.

www.luxurymobilebarbershop.com bietet einen mobilen Frisiersalon, bei welchem der Kunde den Ort der Dienstleistung (Bsp. Flughafenparkplatz) definiert und der Fahrer den mobilen Friseursalon zu dem definierten Ziel fährt, um dort die Dienstleistung zu erbringen.

In Fortbewegungsmitteln angebotene Dienstleistungen bieten bereits heute On-Demand Services besonders im Luxus-Segment an. Diese bieten ihren Endkunden Ortsunabhängigkeit, Zeitersparnis und Exklusivität, meist jedoch zu einem Preis, welcher für eine vielköpfige Kundschaft zu hoch ist. In Fortbewegungsmitteln angebotene Dienstleistungen sind heute wegen hoher Investitionskosten und mangelnder Auslastung meist im Luxus-Segment zu finden. Gründe hierfür sind, dass das Fahrzeug zum Umbau gekauft werden muss, viel Handarbeit für den Umbau notwendig ist, wenige Standard-Bauteile zur Verfügung stehen, der Service-Anbieter lange Wege zwischen den Kunden zu fahren hat und schließlich das operative Management (Bezahlung, Buchung, Steuern) selbstständig zu übernehmen hat. Zudem sind umfangreiche Modifikationen von Fortbewegungsmitteln stets mit kostspieligen Einzelabnahmen der zuständigen Stellen verbunden.

Ausgehend vom vorgenannten Stand der Technik ist es eine Aufgabe der vorliegenden Erfindung, die Wirtschaftlichkeit einer Konzeption einer CAB bzw. eines CAB-Entwurfes zu erhöhen sowie die Gestaltung einer CAB zu vereinfachen.

### Offenbarung der Erfindung

Die vorgenannte Aufgabe wird erfindungsgemäß durch die Gegenstände der unabhängigen Ansprüche gelöst. Die Unteransprüche zeigen bevorzugte Weiterbildungen der Erfindung.

Die Erfindung basiert auf dem Grundgedanken, dass die Konsumbereitschaft von Fahrgästen grundsätzlich höher ist, als wenn dieselbe Person frei verfügbare Zeit für den Konsum einer Dienstleistung aufwenden muss.

Um den Konsum von Dienstleistungen während der Fortbewegung besser auf die Anforderungen des Service-Erbringers und des Kunden anzupassen, fußt die vorliegende Erfindung beispielsweise auf dem Konzept, Fahrzeugplattformen mit allen für ein autonomes Fahren notwendigen technischen Einheiten, wie Fahrwerk, Antriebseinheit usw. bereitzustellen, welche bedarfsweise mit auf eine Dienstleistungserbringung während der Fahrt zugeschnittenen Fahrgastzellen verbindbar sind. Die Fahrgastzellen werden im Rahmen der vorliegenden Offenbarung als "CABs" bezeichnet. "CAB" steht für "Kabine" oder "Cabin".

Anders ausgedrückt ist eine CAB ein für einen spezifischen Service oder eine Servicegruppe angepasster Fahrzeugaufbau, der alle Schnittstellen bereithält, um die zur Dienstleistungserbringung erforderliche Einrichtung zu beherbergen und zu betreiben.

Die CAB kann daher als mechanische Einheit verstanden werden, welche als solche über vordefinierte Schnittstellen mit der Fahrzeugplattform/der Fahrlafette verbunden werden kann. Die Schnittstellen sorgen für eine mechanisch reversible, jedoch zuverlässige Verbindung zwischen der CAB und der Fahrlafette. Weitere Schnittstellen können zur Energieübertragung, insbesondere elektrischer Energie, zwischen der CAB und der Fahrlafette eingerichtet sein. Auch diese Schnittstellen sind reversibel ausgestaltet. Insbesondere können weitere Betriebsmittel (Flüssigkeiten), mechanische Energieübertragungsmittel, z.B. Wellen, Zahnräder, o.ä. für eine mechanische Energieübertragung von der Fahrlafette an die CAB, sowie Funkverbindungen und/oder eine datentechnische Verknüpfung zwischen der einzelnen CAB und der Fahrlafette sowie ihren Bausteinen vorgesehen sein. Für alle informationstechnischen Verknüpfungen der Fahrlafette mit der CAB bieten sich als Schnittstellen beispielsweise elektrische und/oder optische Leitungen, insbesondere Bussysteme, an.

Um eine kostengünstige, rasche und wenig fehleranfällige Konfiguration einer aus Fahrlafette und CAB bestehenden mobilen Einheit (auch "Servicemobil") zu ermöglichen, kann vorgesehen sein, dass sämtliche Schnittstellen zwischen der CAB und der Fahrlafette in im Wesentlichen identischer Richtung zueinander korrespondierend angeordnet sind. Mit anderen Worten kann eine CAB in einer ersten Richtung mechanisch mit der Fahrlafette in Eingriff gebracht werden, wobei beispielsweise Schienen für eine formschlüssige Verbindung zwischen CAB und Fahrlafette sorgen. Dieselbe Richtung kann für die energetische Verbindung zwischen der Fahrlafette und der CAB vorgesehen sein. Insbesondere kann sichergestellt werden, dass eine korrekte mechanische Verbindung zwischen der Fahrlafette und der CAB automatisch zu einer korrekten energetischen Verbindung der Fahrlafette mit der CAB führt. Entsprechendes kann für die Schnittstellen zur Betriebsmittelübertragung gelten. Sofern auch Daten zwischen der CAB und der Fahrlafette (z.B. bidirektional) auszutauschen sind, können beispielsweise leitungsvermittelnde Schnittstellen entsprechend angeordnet sein und bei der Verbindung zwischen der Fahrlafette und der CAB automatisch geschlossen werden. Dies schließt eine drahtlose Übertragung von Daten zwischen Fahrlafette und CAB jedoch nicht aus, wozu ebenfalls Schnittstellen vorgesehen sein können. Zumindest können mehrere Schnittstellen, insbesondere wesensgleiche standardisierte Schnittstellen, räumlich zusammengefasst sein und reversibel, jedoch gegen ein unerwünschtes Lösen gesichert, an korrespondierenden Positionen an der Fahrlafette/der CAB angeordnet sein.

Durch die oben genannte Standardisierung können für die Erbringung von Dienstleistungen während der Fahrt erforderliche Randbedingungen geschaffen werden, welche eine erhebliche Kostenreduzierung und einen bislang unerreichten Individualisierungsgrad von Fahrzeugen ermöglichen. Während die CABs den Dienstleistern vordefinierte Rahmen bieten, um ihre Dienstleistung sicher und anwendertauglich anzubieten, sorgt die Fahrlafette für effiziente, komfortable, rasche und zeitsparende Fortbewegung, insbesondere im Falle automatisch fahrfähiger Fahrlafetten. Hierdurch wird älteren oder fahruntüchtigen Personen sowie Kindern während der Reise eine individuelle Dienstleistung geboten.

Das oben genannte Konzept aus Fahrlafette und CAB ermöglicht die Erbringung von individualisierten Dienstleistungen unterwegs, wobei das beschriebene Konzept die physische Plattform darstellt, welche in Verbindung mit einer digitalen Vermittlungsplattform (Server) potentiellen Kunden zugänglich gemacht wird. Die hier offenbarte Technologie beschreibt das Zusammenspiel der einzelnen Komponenten und Akteure in dem Plattform-Ökosystem. Es ermöglicht die freie Zeit, die durch das autonome Fahren bzw. Taxifahrten entsteht, optimal zu nutzen und zu monetarisieren.

In dem Plattform-Ökosystem werden Probleme verschiedener Akteure gelöst. Dabei ist zwischen Endkunden (nutzen Services während der Fahrt), Service-Anbietern (bieten Services während der Fahrt an wie z.B. Anwälte) und Microservice-Providern (stellen Bausteine zur Ausstattung der Fahrzeuge bereit) zu unterscheiden. Die Bausteine müssen nicht physisch sein bzw. die gegenständliche Inneneinrichtung der CAB betreffen, sondern könnten auch Software-Bausteine sein, z.B. eine Darstellung eines Restaurant-Menüs auf einem Display.

Die Vermittlung aus Fahrlafette und CAB bestehender Servicemobile kann beispielsweise über einen Server in Verbindung mit vom Kunden/Dienstleistungsanbieter verwendeten (mobilen) Drahtloskommunikationsendgeräten ("Anwenderendgerät") vorgenommen werden. Eine Applikation stellt hierbei die Schnittstelle zum Endkunden dar. Der Endkunde bucht über die Applikation die mobilen On-Demand-Services. Dazu definiert der Endnutzer Startpunkt, Ziel, Startzeit und Art der während der Fahrt zu erbringenden Dienstleistung. Endkunden können weitere Aufgaben über die Applikation erledigen wie z.B. Anfragen senden, Suchergebnisse sichten, Servicemobile/Dienstleistungen buchen, Bewertungen abgeben sowie die gebuchten bzw. bezogenen Dienstleistungen bezahlen.

Der Serviceanbieter kann ein eigenes Profil digital bereithalten, mittels dessen sich der Endnutzer über die angebotenen Services, Kundenmeinungen etc. informieren kann. Entscheidet sich der Endnutzer für den Bezug eines Services, wird seine Anfrage auf dem Anwenderendgerät des mobilen Serviceanbieters oder in dessen Fahrzeug angezeigt. Der Serviceanbieter kann die Anfrage akzeptieren, wodurch der kombinierte Beförderungs-/Dienstleistungsvertrag zustande kommt.

Im Rahmen der vorliegenden Offenbarung erbringbare Dienstleistungen lassen sich beispielsweise in die folgenden Ausprägungen/Kategorien gliedern:
- Die Dienstleistung kann von einem Menschen oder unbemannt erbracht werden (z.B. Friseur gegenüber Multimedia-Darbietung)
- individualisierte CAB oder Massenware (z.B. generisches Restaurant gegenüber systemgastronomischer Ausgestaltung).

Zusammengefasst umfasst die der vorliegenden Technologie zugrundeliegende Fahrzeugarchitektur zumindest zwei gegenständliche Komponenten: Die zur Fortbewegung erforderliche Komponente wird als "Fahrlafette" bezeichnet, in welcher sich die Technik zum autonomen Fahren befinden kann. Zudem wird der Fahrzeugaufbau (CAB) verwendet, der alle Schnittstellen bereithält, um die zur Dienstleistungserbringung erforderliche, spezifische Einrichtung zu beherbergen und zu betreiben. Die aus den vorgenannten Komponenten bestehenden Fahrzeuge/Fortbewegungsmittel werden auch als "Servicemobil" bezeichnet. Sie könnten auch als "physische Apps auf Rädern" bezeichnet werden, da sie hinsichtlich ihres Funktionsumfangs so vielfältig sind, wie durch Applikationen individualisierte Smartphone-Plattformen.

Ausgehend von der vorstehend offenbarten Technologie wird die oben genannte Aufgabe durch ein Verfahren zur Konfiguration einer CAB gelöst. Die CAB dient der temporären Verbindung mit einer Fahrlafette zu einem Servicemobil, welches für die Erbringung einer Dienstleistung während der Fahrt des Servicemobils eingerichtet ist. In einem ersten Schritt wird eine Eingabe eines Anwenders ermittelt, mit welcher er eine CAB-Vorlage auswählt. Der Anwender kann bspw. ein späterer Dienstleistungsanbieter sein, welcher die CAB zur Erbringung von Dienstleistungen während der Fahrt am Kunden konfigurieren möchte. Die Auswahl der CAB-Vorlage erfolgt bspw. rechnergestützt. Hierzu können mehrere CAB-Vorlagen ausgegeben und dem Anwender zur Auswahl gestellt werden. Die CAB-Vorlage kann bspw. eine sog. CAB erster Ordnung sein, welche unmittelbar mit der Fahrlafette verbunden wird. Die Verbindung kann mechanischer und/oder elektrischer und/oder informationstechnischer Natur sein. Die CAB-Vorlage kann sich alternativ oder zusätzlich auch auf eine CAB zweiter Ordnung beziehen, welche mit der CAB erster Ordnung eines zusammengesetzten Servicemobils verbunden wird. In entsprechender Weise kann die CAB-Vorlage eine CAB höherer Ordnung betreffen, welche in Verbindung mit den CABs niedrigerer Ordnungen und einer Fahrlafette zu einem Servicemobil zusammengesetzt wird. Im Ansprechen auf die Auswahl der CAB-Vorlage wird die CAB-Vorlage automatisch als Basis einer weiteren Konfiguration der CAB definiert. Mit anderen Worten wird die Definition der Wunsch-CAB des Anwenders weiter konkretisiert. Hierzu können bspw. Fragen aus einem Fragenkatalog gestrichen werden, welche sich aufgrund der Auswahl der CAB-Vorlage nun nicht mehr stellen. Zudem können Urheberrechte an der CAB-Vorlage dazu führen, dass der Anwender bei Verwendung der CAB-Vorlage zur Zahlung an den Designer der CAB-Vorlage verpflichtet wird. Bspw. können einmalige Zahlungen, wiederkehrende Zahlungen und/oder umsatzbasierte Zahlungen vereinbart werden, um den Aufwand der Erstellung der CAB-Vorlage rück zu vergüten. Die Verwendung einer CAB-Vorlage bietet für den Anwender/späteren Dienstleistungsanbieter erhebliche Vorteile und eine nahezu unschätzbare Zeitersparnis. Bspw. können durch die Verwendung der CAB-Vorlage Abnahmen, Betriebserlaubnisse und Funktionstests erübrigt werden bzw. aufgrund der Übernahme der CAB-Vorlage mit Sicherheit bestanden werden. Zudem kann der Anwender sichergehen, dass rechtliche und fahrzeugtechnische Anforderungen an die CAB erfüllt werden, da eine gewisse konstruktionstechnische Identität mit der bereits zu einem früheren Zeitpunkt gebauten und getesteten CAB sichergestellt ist.

Die Unteransprüche zeigen bevorzugte Weiterbildungen der Erfindung.

Bspw. kann der Anwender eine CAB, welche ihm gefällt/empfohlen worden ist, fotografieren und ein Upload des Fotos in den erfindungsgemäßen Konfigurator veranlassen. Wird das Foto der Wunsch-CAB empfangen, kann der Konfigurator in Abhängigkeit eines Bildinhaltes des Fotos die zugehörige CAB-Vorlage automatisch (z. B. bilderkennungstechnisch) aussuchen und die Auswahl der CAB-Vorlage somit unterstützen oder automatisch vornehmen. Die Vielzahl vordefinierter CAB-Vorlagen kann also aufgrund einer optischen Erscheinung dahingehend durchsucht werden, welche der CAB-Vorlagen eine größtmögliche Ähnlichkeit mit dem Bildinhalt des Fotos aufweist.

Bekanntermaßen weisen digitale Fotos mitunter sog. Geo-Tags auf, welche Auskunft über die Position der Kamera während ihrer Aufnahme geben. Sofern die im Einsatz befindlichen CABs Auskunft über ihre jeweilige Position/ihrem Standort gewähren, kann die Zeit der Aufnahme des Fotos mit der Position der Kamera zum Zeitpunkt der Aufnahme des Fotos mit den freigegebenen Positionsdaten der registrierten CABs abgeglichen werden. Auf diese Weise kann bereits aufgrund digitaler Positions-/Zeitdaten eine überschaubare Vielzahl von CABs gefiltert werden, sodass das Bildmaterial nun nicht notwendigerweise besonders aufschlussreich sein muss, um die abgelichtete CAB zu identifizieren und die zugehörige CAB-Vorlage zuzuordnen.

Weiter bevorzugt kann eine maschinenlesbare eindeutige Kennung/Identifikation einer CAB durch den Konfigurator empfangen werden, welchen der Anwender zur Verfügung stellt. Bspw. kann der Anwender eine entsprechende Identifikation der CAB mittels eines Fotoapparates bzw. mittels eines Scanners zur Aufnahme eines optischen Codes bereitstellen. Die maschinenlesbare Identifikation kann bspw. nach Art einer Seriennummer, einer Fahrgestellnummer o. ä. auf derjenigen CAB angebracht sein, welche der Anwender zur Grundlage des erfindungsgemäßen Konfigurationsvorgangs machen möchte. Auf Basis der eindeutigen Identifikation wird durch den Konfigurator diejenige CAB-Vorlage aufgerufen und dem Anwender zur Auswahl gestellt, welche eine zumindest teilweise identische Spezifikation wie die abgelichtete/identifizierte CAB aufweist. Nun kann der Anwender entscheiden, ob er die CAB-Vorlage verwenden möchte und welche Eigenschaften er individualisieren/anpassen möchte.

Die CAB-Vorlage kann auf Basis eines Datensatzes von einem CAB-Designer zur Verfügung gestellt werden. Dieser kann die von ihm gestellte CAB-Vorlage entsprechend einer Applikation in einem digitalen Applikationshandel (z. B. "App-Store" oder "CAB-Store") zum Kauf bzw. zur Kopie anbieten. Er kann zumindest ein Vergütungsmodell, bevorzugt mehrere Vergütungsmodelle (z. B. Einmalzahlung, Monatsmiete, umsatzbasierte Vergütung u. ä.) auswählen und jeweilige Geldbeträge zuordnen. Sofern alle Informationen vorliegen, um die CAB-Vorlage den vordefinierten Anforderungen entsprechend im App-Store anbieten zu können, kann eine Freigabe vom Designer/Absender erteilt werden und im Ansprechen darauf der Datensatz zur Auswahl der CAB-Vorlage durch eine Vielzahl Anwender (automatisch) bereitgestellt werden.

Zuvor kann eine Vielzahl Überprüfungsschritte sicherstellen, dass die CAB gewissen Eigenschaften und Qualitätsanforderungen entspricht. Insbesondere können Sicherheitstest, Funktionstests, Dauerhaltbarkeitstests, akustische Tests (Klappern/Knarzen) elektromagnetische Verträglichkeits (EMV)-Tests etc. ausgeführt werden bzw. Zertifikate zur erfolgreichen Überprüfung des CAB-Entwurfs angefordert werden. Bspw. kann zunächst sichergestellt werden, dass die verwendeten Materialien einer Recycling-Verordnung entsprechen. Ein entsprechendes Regelwerk in Deutschland wird auch als "Altautoverordnung" bezeichnet. Zudem können brandschutztechnische Untersuchungen angeordnet bzw. erfolgreiche Testergebnisse angefordert werden. Ebenso können Crash-Tests, Allergen-Tests und andere Untersuchungen ausgeführt werden, um die Mindestvoraussetzungen für einen sicheren und erfolgreichen Einsatz der CAB in einem Servicemobil sicherzustellen.

Sofern der Anwender eine Individualisierung eines durch die CAB-Vorlage vordefinierten Kriteriums wünscht, kann bspw. in Abhängigkeit übriger Eigenschaften und/oder einer Kategorie der CAB-Vorlage Repräsentationen verfügbarer unterschiedlicher Ausgestaltungen der bereits definierten Eigenschaft zur Auswahl durch den Anwender dargestellt werden. Bspw. können einzelne Eigenschaften der CAB-Vorlage beim Editieren dazu führen, dass die Konkretisierungs-Stufe der CAB sinkt. Alternativ oder zusätzlich können weitere Eigenschafen der CAB-Vorlage erneut und/oder alternativ zu definieren sein, sobald die vom Anwender zur Editierung gewählte Eigenschaft nicht mehr festgelegt ist. Dies ermöglicht eine besonders effiziente Herangehensweise beim Definieren einer CAB, da eine Vielzahl von Eigenschaften durch die Auswahl einer konkreten CAB-Definition bereits aufeinander abgestimmt ist, während der Anwender durch Editieren einzelner, vordefinierter Eigenschaften eine vollumfängliche Anpassung an seine Bedürfnisse erzielen kann.

Die CAB-Vorlage kann bspw. als vollständige datentechnische Spezifikation der CAB verstanden werden. Mit anderen Worten könnte die datentechnische Spezifikation zur eindeutigen Fertigung einer entsprechenden CAB verwendet werden, ohne dass Rückfragen zur Ausgestaltung der CAB auftreten würden. Alternativ kann die CAB-Vorlage zumindest eine Teil-Spezifikation der CAB darstellen, welche weitere Definitionsschritte/Rückfragen an den Anwender erfordert bzw. aufwirft. Ein Bestandteil der CAB-Vorlage kann eine datentechnische, dreidimensionale Repräsentation der CAB sein, welche der Anwender bspw. auf einem Bildschirm und/oder in Form einer virtuellen Realität besichtigen, drehen und gestalten kann. Insbesondere können Schritte der Konkretisierung der CAB in Echtzeit am 3-D-Modell veranschaulicht werden.

Insbesondere kann die Eingabe des Anwenders eine Auswahl eines Verkehrsraumes/einer Region/eines Staates als zukünftiger Einsatzort der CAB definieren. Um die Anpassung der CAB an die Gesetzeslage, die Markterfordernisse etc. anzupassen, kann automatisch ermittelt werden, dass eine Ausstattungsvariante und/oder ein Parameter einer Ausstattung der CAB mit einer Anforderung aufgrund des Verkehrsraumes/der Gesetzeslage etc. nicht konform ist. Daher kann in diesem Fall automatisch eine alternative Definition einer Ausstattungsvariante bzw. eines Parameters vom Anwender gefordert werden. Mit anderen Worten kann die Definition eines zukünftigen Einsatzortes dazu führen, dass bestimmte Ausstattungsvarianten/Parameter automatisch festgelegt, zumindest konkretisiert oder im umgekehrten Fall abgelehnt oder als ungeeignet markiert/kommentiert werden. Zumindest kann eine Ausgabe an den Anwender ergehen, welche den Anwender darauf hinweist, dass die gewählte Ausstattungsvariante/der gewählte Parameter zu Konflikten führen könnte.

Mögliche Merkmale des erfindungsgemäßen Verfahrens sowie der übrigen erfindungsgemäßen Aspekte werden nachfolgend beispielhaft wiedergegeben:
Bspw. kann ein CAB-Designer sein/e CAB-Konzept bzw. CAB-Vorlage veröffentlichen, der spätere Service-Anbieter das CAB-Konzept auswählen, die mit der CAB tatsächlich erzielten Umsätze gemessen/ermittelt und eine vorab vereinbarte Vergütung an den CAB-Designer gezahlt werden.

Ein Prozess der Übernahme von CAB-Konzepten sowie zur Vergütungsregelung kann bspw. wie folgt aussehen:
In einem ersten Schritt veröffentlicht der CAB-Designer das CAB-Konzept/die CAB-Vorlage. Anschließend wählt der Service-Anbieter das CAB-Konzept aus, indem das CAB-Konzept in einem CAB-Konfigurator dargestellt und durch den Anwender bestellt wird. In den die CAB umfassenden Servicemobilen werden während der Dienstleistungserbringung die Umsätze ermittelt und protokolliert. In Abhängigkeit des Vergütungsmodells wird (bspw. am Monatsende) eine Zahlung von einem Konto des Service-Anbieters automatisch an ein Konto des CAB-Designers veranlasst. Dies kann ohne aktive Einbindung des CAB-Designers und/oder des Serviceanbieters erfolgen. Über eine farbliche Definition einzelner Komponenten einer CAB-Vorlage kann der spätere Dienstleitungsanbieter/Anwender auch Logos oder Farbpaletten hochladen, welche er zur Grundlage der Gestaltung seiner CAB machen möchte. Bspw. per Drag-and-Drop oder mittels eines Pipettenwerkzeuges kann der Anwender einzelne Oberflächenbereiche der CAB-Vorlage bearbeiten/einfärben, wobei vordefinierte Oberflächenbereiche aufgrund der Vorlage in einer einheitlichen Farbe erstrahlen, um anerkannte Designrichtlinien und Designkonzepte einzuhalten.

Gemäß einem zweiten Aspekt der vorliegenden Erfindung wird eine Vorrichtung zur Konfiguration einer dienstleistungsspezifisch ausgestalteten Kabine (CAB) für ein temporär aus einer Fahrlafette und der CAB zusammengesetzte Servicemobil zur Erbringung einer Dienstleistung während der Fahrt des Servicemobils vorgeschlagen. Die Vorrichtung kann bspw. als rechentechnische Vorrichtung bzw. als digitaler Konfigurator verstanden werden. Sie umfasst einen Dateneingang z. B. einen Mouseport, einen Tastaturport, ein mit einem Digitizer verbundenen Eingang, eine Auswerteeinheit (z. B. einen Prozessor, ein elektronisches Steuergerät, einen Mikrocontroller o. ä.) und einen Datenausgang, welcher bspw. eine graphische Ausgabe der CAB-Vorlage bzw. einer modifizierten CAB-Vorlage darstellen kann. Mittels des Dateneingangs wird eine Eingabe eines Anwenders ermittelt, mittels welcher der Anwender eine CAB-Vorlage zur Basis seines Konfigurationsprozesses macht. Über den Datenausgang wird der Anwender über diejenigen Schritte informiert, welche nach der Auswahl der CAB-Vorlage als nächstes anstehen, um die Wunsch-CAB des Anwenders vollständig zu spezifizieren. Insbesondere kann ein Fragenkatalog konkretisiert, Parameter automatisch festgelegt und aufgeworfener Definitionsbedarf an den Anwender kommuniziert werden. Die Merkmale, Merkmalskombinationen und die sich aus diesen ergebenden Vorteile der erfindungsgemäßen Vorrichtung entsprechen derart ersichtlich demjenigen, welche in Verbindung mit dem oben genannten Verfahren im Detail besprochen worden sind, dass zur Vermeidung von Wiederholungen auf die obigen Ausführungen verwiesen wird.

Gemäß einem dritten Aspekt der vorliegenden Erfindung wird ein Computerprogrammprodukt vorgeschlagen, welches Instruktionen umfasst, welche, wenn sie auf einem programmierbaren Prozessor/einer Auswerteeinheit einer erfindungsgemäßen Vorrichtung ausgeführt werden, die Vorrichtung in die Lage versetzen, die Schritte eines Verfahrens gemäß dem erstgenannten Erfindungsaspekt auszuführen. Das Computerprogrammprodukt kann bspw. als CD/DVD, Blue-Ray-Disc, Flash-Speicher, Festplatte, RAM/ROM, Cache etc. ausgestaltet sein.

Gemäß einem vierten Aspekt der vorliegenden Erfindung wird eine Signalfolge repräsentierend Instruktionen vorgeschlagen, welche, wenn sie auf einer Auswerteeinheit einer erfindungsgemäßen Vorrichtung ausgeführt werden, die Vorrichtung in die Lage versetzen, die Schritte eines Verfahrens gemäß dem erstgenannten Erfindungsaspekt auszuführen. Auf diese Weise wird auch die informationstechnische Bereitstellung der Instruktionen für den Fall unter Schutz gestellt, dass sich die hierzu erforderlichen Speichermittel außerhalb des Geltungsbereiches der beigefügten Ansprüche befinden.

### Kurzbeschreibung der Zeichnung

Nachfolgend werden Ausführungsbeispiele der vorliegenden Erfindung anhand der beigefügten Zeichnungen im Detail beschrieben. In den Zeichnungen ist:
- Figur 1: eine Prinzipskizze veranschaulichend im Rahmen der vorliegenden Erfindung verwendbare Ausführungsbeispiele für CABs in Verbindung mit einer Fahrlafette, um ein Servicemobil zur Realisierung der vorliegenden Erfindung zu erzielen,
- Figur 2: eine schematische Darstellung eines Plattform-Ökosystems zur Veranschaulichung von Informationsflüssen bei der Realisierung der vorliegenden Erfindung,
- Figur 3: eine schematische Darstellung einer Fahrlafette, zweier CABs und ihrer gegenseitigen Schnittstellen gemäß einem Ausführungsbeispiel der hier offenbarten Technologie,
- Figur 4: eine perspektivische Darstellung einer Interaktion eines CAB-Designers und einer Anwenderin mit einem Ausführungsbeispiel einer erfindungsgemäßen Vorrichtung bei der Ausführung eines erfindungsgemäßen Verfahrens,
- Figur 5: eine perspektivische Darstellung einer Anwenderin beim Ablichten einer ihr gefallenden CAB, und
- Figur 6: ein Flussdiagramm veranschaulichend Schritte eines Ausführungsbeispiels eines erfindungsgemäßen Verfahrens zur Konfiguration einer CAB.

### Ausführungsformen der Erfindung

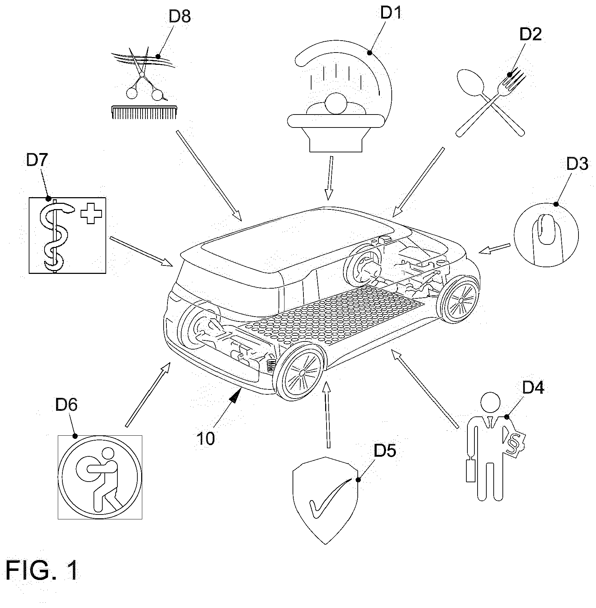

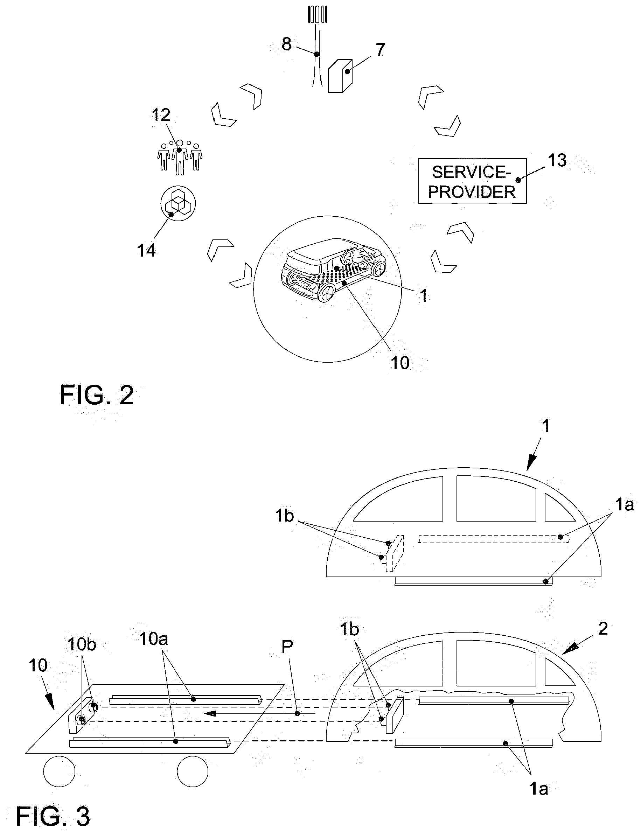

Figur 1 zeigt eine schematische Darstellung einer Fahrlafette 10 eines Servicemobils gemäß einem Ausführungsbeispiel der hier offenbarten Technologie. Die Fahrlafette 10 bringt dabei sämtliche Merkmale mit, welche für die Fortbewegung, insbesondere die automatische Fortbewegung, erforderlich sind. Lediglich beispielhaft seien das Fahrwerk, der Antriebsstrang, der Energiespeicher, Längs-/Querführungslogik und -einrichtungen, Außenbeleuchtung, etc. Im Rahmen der vorliegend offenbarten Technologie werden (nicht dargestellte) CABs verwendet, um die Fahrlafette zur Erbringung einer jeweiligen Dienstleistung D1 bis D8 spezifisch einzurichten. Beispielsweise kann eine Bestrahlungs- und/oder Bräunungseinrichtung D1 in Form einer CAB mit der Fahrlafette 10 verbunden werden, um die Dienstleistung "Bräunung" anbieten zu können. Beispielsweise können eine UV-Bestrahlungseinheit und/oder eine Bräunungsdusche enthalten sein. Um gastronomische Dienstleistungen D2 erbringen zu können, kann eine Restaurant-CAB mit der Fahrlafette 10 verbunden werden. Die Zubereitung von Speisen und der Verzehr derselben kann durch die Einrichtung der CAB ermöglicht werden. Eine Kosmetik- bzw. Nagelpflege-Dienstleistung D3 kann beispielsweise erfordern, dass die CAB besondere Werkbänke, eine Absauganlage zum raschen Austausch der Innenraumluft und besonders helle Beleuchtungseinrichtungen (sog. Spots) aufweist. Zur Erbringung von Rechtsberatungsdienstleistungen D4 können eine Bibliothek und/oder mindestens zwei Sitzgelegenheiten in einer entsprechend ausgestalteten CAB vorgesehen sein. Entsprechendes gilt für eine Versicherungsberatungs-Dienstleistung bzw. Finanzberatungs-Dienstleistung D5. Insbesondere können hierbei Video-Konferenz-Hardware und ein großer Bildschirm zur Darstellung von Grafiken und anderen Präsentationsinhalten vorgesehen sein. Auch Reha-Dienstleistungen D6 und ärztliche Dienstleistungen D7 können durch die Ausgestaltung einer jeweiligen CAB bestmöglich unterstützt werden. Beispielsweise können Untersuchungs- und/oder Trainingsgeräte Bestandteile entsprechender CABs sein. Um Frisierdienstleistungen D8 bereitstellen zu können, kann beispielsweise ein Waschbecken, wie es in Friseursalons zum Haarewaschen üblich ist, ein 230V-Stecker zum Betreiben eines Haartrockners, ein großer Spiegel und ein höhenverstellbarer Frisierstuhl vorgesehen sein. Die vorgenannten CABs können über reversible mechanische Schnittstellen mechanisch fest und crash-sicher mit der Fahrlafette 10 verbunden werden. Um Energie- und Informationsflüsse zwischen der Fahrlafette 10 und der CAB zu gewährleisten, werden in Verbindung mit Figur 3 detailliert dargestellte reversible Schnittstellen vorgeschlagen.

Figur 2 zeigt eine schematische Darstellung eines Plattform-Ökosystems zur Veranschaulichung von Informationsflüssen bei der Realisierung der vorliegend offenbarten Technologie. Ein Micro-Service-Provider 14 individualisiert die CABs 1 der Servicemobile, welche anschließend mit einer jeweiligen Fahrlafette 10 (temporär oder dauerhaft) verbunden und bereitgestellt werden. Die Vermittlung der Servicemobile wird von einem Serviceprovider 13 übernommen, welcher über einen Server 7 und beispielsweise einen Funkturm 8 eines Drahtloskommunikationsnetzwerkes den Bedarf der Anwender 12 ermittelt und mit den grundsätzlich verfügbaren/angebotenen Servicemobilen abgleicht. Bestmögliche Kombinationen aus angebotenem Servicemobil und interessiertem Anwender 12 führen zum einzelnen Vertragsabschluss über die Bereitstellung von Mobilitätsdienstleistung und einer CAB-spezifischen Dienstleistung. Der Micro-Service-Provider 14 kann auch die einzelne Dienstleistung bzw. ein Dienstleistungspaket vor dem Endkunden erbringen und hierzu den Betrieb des Servicemobils bzw. der CAB überwachen und sicherstellen oder gar an Bord des Servicemobils eine manuelle Dienstleistung in einem bemannten Servicemobil erbringen. Selbstverständlich muss der Serviceprovider 14 nicht identisch mit dem Hersteller/Ausstatter der CAB 1 sein. Diesbezüglich ergeben sich unterschiedliche Konstellationen zum Design, zur Erstellung und zur Verwendung der CABs bei der Dienstleistungserbringung vor dem Endkunden.

Figur 3 zeigt eine prinzipielle, perspektivische Skizze zur temporären Verbindung einer Fahrlafette 10 mit einer ersten CAB 1 oder einer zweiten CAB 2. Korrespondierend zueinander ausgestattete mechanische Schnittstellen 10a auf der Fahrlafette 10 und mechanische Schnittstellen 1a in den CABs 1, 2 sorgen für eine rasche und crash-sichere Verbindung zwischen CAB 1, 2 und Fahrlafette 10. Sofern Informationen und/oder Energie von der CAB 1, 2 zur Fahrlafette 10 oder anders herum ausgetauscht werden sollen, werden zusätzliche, zueinander korrespondierende Schnittstellen 1 b, 10b an den CABs 1, 2 und der Fahrlafette 10 angeordnet, welche ebenfalls in Richtung eines Pfeils P miteinander in Eingriff gebracht werden. Alternativ oder zusätzlich können in entsprechender Weise weitere oder alternative Schnittstellen zwischen den CABs 1, 2 und der Fahrlafette 10 miteinander in Eingriff gebracht werden. Beispielsweise können eine Heiz-/Kühlleistung, eine hydraulische Energie, Druckluft, etc., zwischen den CABs 1, 2 und der Fahrlafette 10 ausgetauscht werden. Die Schnittstellen können Informationstechnisch überwacht werden, so dass erst bei einer ordnungsgemäßen Kontaktierung der jeweiligen Schnittstellen und insbesondere einer entsprechenden Verriegelung der Schnittstellen eine Verwendung/Fahrt des Servicemobils ermöglicht wird. Während die dargestellten mechanischen Schnittstellen 10a der Fahrlafette 1 mit U- bzw. Schienenprofile ausgestaltet sind, welche mit beispielhaft dargestellten T-Profilen als Schnittstellen 1a der CABs 1, 2 in Eingriff gebracht werden können, versteht es sich von selbst, dass andere mechanische Schnittstellen möglich sind, welche gegebenenfalls in einer anderen Richtung als derjenigen des dargestellten Pfeils P miteinander in Eingriff zu bringen sind. Sofern die CABs 1, 2 jedoch aufgebockt in geeigneter Höhe gelagert werden können, kann die Fahrlafette 10 wie dargestellt selbsttätig unter die CAB 2 fahren, wobei die Schnittstellen 1b, 1a, 10b, 10a miteinander in Eingriff gebracht werden, ohne dass eine aufwendige Hebevorrichtung o.ä. erforderlich ist. Gegebenenfalls kann ein Luftfahrwerk der Fahrlafette 10 verwendet werden, um eine geringfügige Höhenanpassung vorzunehmen. Während im Rahmen der vorliegend offenbarten Technologie eine CAB nicht notwendiger Weise als Fahrgastzelle mit dienstleistungsspezifischer Inneneinrichtung verstanden werden muss, stellt dies eine geeignete Ausgestaltung der vorliegend offenbarten Technologie dar. Alternativ kann die CAB im Sinne der vorliegend offenbarten Technologie einen lediglich temporären Bestandteil der (integral mit der Fahrlafette 10 gefertigten) Fahrgastzelle darstellen. Bei dieser Ausgestaltung können die in Figur 3 dargestellten Schnittstellen (oder andere geeignete Schnittstellen) zwischen der CAB und der Fahrgastzelle angeordnet sein. Die Schnittstellen können beispielsweise am Dach und/oder in den Seitenwänden und/oder im Boden der CAB sowie der Fahrgastzelle angeordnet sein.

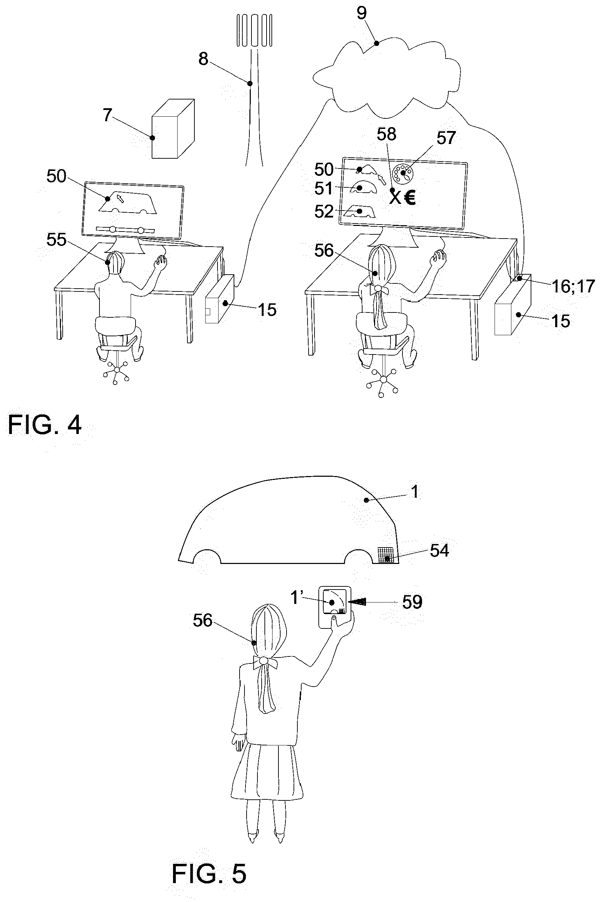

Figur 4 zeigt einen CAB-Designer 55 als Absender eines Datensatzes. Der CAB-Designer 55 hat mittels eines Computers 15 eine CAB-Vorlage 50 erstellt. Nach der erfolgreichen Fertigstellung und vollumfänglichen Spezifikation der CAB-Vorlage 50 gibt der CAB-Designer 55 die CAB-Vorlage 50 zum Angebot in einem App-Store über das Internet 9 frei. Hierzu kann die CAB-Vorlage 50 auf einem Server 7 abgelegt werden und über einen Sensorturm 8 auch drahtlos verfügbar gemacht werden. Eine Anwenderin 56 als zukünftige Dienstleistungsanbieterin sitzt an ihrem Schreibtisch und konfiguriert mittels ihres Computers 15 als Auswerteeinheit, welcher über einen Mouseport 16 als Dateneingang und einen Monitorport 17 als Datenausgang verfügt eine CAB, in welcher sie zukünftig ihre mobile Dienstleistung während der Fahrt anbieten und erbringen möchte. Zur Auswahl gestellt werden beispielhaft drei unterschiedliche CAB-Vorlagen 50, 51 und 52, welche sich zur Erbringung der Dienstleistung eignen oder gar für diese vorgesehen sind. Die Anwenderin 56 hat sich aufgrund persönlicher Präferenzen für die CAB-Vorlage 50 des CAB-Designers 55 entschieden. Die vom CAB-Designer 55 offengelassenen Parameter "Farbpalette" 57 und "Preisstufe" 58 können anschließend individuell von der Anwenderin 56 definiert werden, im Ansprechen worauf eine vollständig spezifizierte und zum Abschluss der Bestellung zur Fertigung der CAB versandfähige Definition ihrer Wunsch-CAB vorliegt.

Figur 5 zeigt eine alternative Möglichkeit für eine Anwenderin 56, ihre Wunsch-CAB 1 zu bestellen. Mittels ihres Smartphones 59 lichtet die Anwenderin 56 die ihr vorliegende CAB 1 ab. Das Foto 1' der CAB 1 weist auch eine Ablichtung des optischen Codes 54 auf, welchen die CAB 1 als Fahrgestellnummer oder Seriennummer trägt. Auch eine Repräsentation des optischen Codes 54 ist in dem Foto 1' enthalten. Zudem sind (nicht dargestellt) Zeitstempel und ein Geo-Tag in der das Foto 1' repräsentierenden Datei enthalten. Da auch die CAB 1 ihre aktuelle Position fortlaufend an einen Server 7 meldet, ist der Server 7 imstande, durch Abgleich von Zeit und Ort der CAB 1 einerseits und des Smartphones 59, mit welchem das Foto 1' aufgenommen wurde, andererseits zu ermitteln, welche CAB 1 die Anwenderin 56 zur Grundlage ihres Bestellvorgangs machen möchte. Die Anwenderin 56 muss nur die Datei repräsentierend das Foto 1' in den erfindungsgemäßen Konfigurator laden, wo die Zeit-/Ortsstempel und/oder die Form der CAB 1 und/oder die Repräsentation des optischen Codes 54 mit einer Datenbank abgeglichen werden, um zu ermitteln, welche CAB-Vorlage für die Anwenderin den bestmöglichen Ausgangspunkt zur Konfiguration ihrer Wunsch-CAB darstellt.

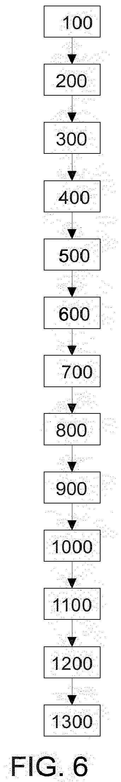

Figur 6 zeigt Schritte eines Ausführungsbeispiels eines erfindungsgemäßen Verfahrens zur Konfiguration einer CAB. In Schritt 100 wird ein Datensatz repräsentierend eine Spezifikation einer CAB-Vorlage von einem CAB-Designer empfangen. In Schritt 200 wird auch eine zugehörige Freigabe vom CAB-Designer empfangen, im Ansprechen worauf der Datensatz in Schritt 300 automatisch zur Auswahl der CAB-Vorlage durch einen Anwender in einem erfindungsgemäßen Konfigurator bereitgestellt wird. In Schritt 400 wird die Spezifikation der CAB-Vorlage automatisch mit einem Anforderungskatalog abgeglichen, um sicherzustellen, dass die CAB zu sicherheitstechnisch und rechtlichen unbedenklichen sowie komfortablen und dem Markenimage des Anbieters angemessenen Kundenerlebnissen führen wird. In Schritt 500 wird eine Eingabe eines Anwenders zur Auswahl einer verfügbaren Dienstleistung ermittelt. Dies kann bspw. rechnergestützt und/oder mittels eines mobilen Drahtlos-Kommunikationsendgerätes erfolgen. In Abhängigkeit der vom Anwender ausgewählten Dienstleistung werden anschließend in Schritt 600 Repräsentationen verfügbarer unterschiedlicher CAB-Vorlagen dargestellt, welche sämtlich für die Erbringung der vom Anwender anzubietenden Dienstleistung vorgesehen, eingerichtet und geeignet sind. In Schritt 700 wird eine Eingabe eines Anwenders zur Auswahl einer der dargestellten CAB-Vorlagen ermittelt. Im Ansprechen darauf wird in Schritt 800 die CAB-Vorlage als Basis einer weiteren Konfiguration der Wunsch-CAB des Anwenders definiert. In Schritt 900 wird eine Eingabe des Anwenders zur Auswahl eines vordefinierten Verkehrsraumes ermittelt. Um sicherzustellen, dass die zu definierende CAB bzw. das mittels ihr zu erzeugende Servicemobil rechtliche Rahmenbedingungen einhält, wird in Schritt 1000 automatisch ermittelt, dass eine Ausstattungsvariante der CAB mit einer rechtlichen Anforderung an die CAB kollidiert. In Schritt 1100 wird daher eine alternative Definition der Ausstattungsvariante automatisch angefordert. Mit anderen Worten wird der Anwender gebeten, die Ausstattungsvariante zu ändern, um dem von ihm vordefinierten Verkehrsraum und seinen Randbedingungen zu entsprechen. In Schritt 1200 wird anschließend eine Eingabe des Anwenders ermittelt, durch welche er die CAB-Vorlage hinsichtlich einer bereits zu einem früheren Zeitpunkt definierten Eigenschaft editiert, um die rechtlichen Rahmenbedingungen des Verkehrsraums einzuhalten. Um die anderweitige Definition der Ausstattungsvariante zu unterstützen, wird in Schritt 1300 schließlich eine Vielzahl Repräsentationen verfügbarer Ausgestaltungen der Ausstattungsvariante dargestellt, um eine Auswahl durch den Anwender zu unterstützen.

Im Ergebnis bietet die vorliegende Erfindung eine Möglichkeit, die Aufwendungen zur Erstellung einer CAB-Vorlage wirtschaftlich lohnenswert und die Konfiguration einer CAB für den Anwender/Dienstleistungsanbieter möglichst einfach zu machen.

### Bezugszeichenliste

- 1: erste CAB
- 1': Foto
- 1a: mechanische Schnittstelle der CAB
- 1b: informationstechnische/energetische Schnittstelle der CAB
- 2: zweite CAB
- 7: Server
- 8: Funkturm
- 10: Fahrlafette
- 10a: mechanische Schnittstelle der Fahrlafette
- 10b: energetische/informationstechnische Schnittstelle der Fahrlafette
- 12: Anwender
- 13: Serviceprovider
- 14: Micro-Service-Provider
- 15: Computer
- 16: Mouseport
- 17: Monitorport
- 50, 51, 52: CAB-Vorlage
- 54: Optischer Code
- 55: CAB-Designer
- 56: Anwenderin
- 57: Farbpalette
- 58: Preis
- 59: Smartphone
- 100-1300: Verfahrensschritte
- D1-D8: Dienstleistungen
- P: Pfeil

## Patentansprüche

1. Verfahren zur Konfiguration einer dienstleistungsspezifisch ausgestalteten Kabine (1), nachfolgend "CAB (1)" genannt, für ein temporär aus einer Fahrlafette (10) und der CAB (1) zusammengesetztes Servicemobil zur Erbringung einer Dienstleistung (D1-D8) während der Fahrt, wobei das Verfahren die Schritte umfasst:
- Ermitteln (700) einer Eingabe eines Anwenders (56) zur Auswahl einer CAB-Vorlage (50) und im Ansprechen darauf
- automatisches Definieren (800) der CAB-Vorlage (50) als Basis einer weiteren Konfiguration der CAB (1).

2. Verfahren nach Anspruch 1, weiter umfassend
- Empfangen eines Uploads eines Fotos (1') einer CAB (1) und in Abhängigkeit des Fotos (1')
- automatisches Zuordnen einer CAB-Vorlage (50) aus einer Vielzahl CAB-Vorlagen (50, 51, 52) in Abhängigkeit des Fotos (1').

3. Verfahren nach Anspruch 1 oder 2, weiter umfassend
- Empfangen einer eindeutigen, insbesondere maschinenlesbaren, Identifikation (54) einer CAB (1) und in Abhängigkeit der Identifikation (54)
- Zuordnen der CAB-Vorlage (50), welche eine zumindest teilweise identische Spezifikation wie die zur Identifikation (54) gehörige CAB (1) aufweist.

4. Verfahren nach einem der vorstehenden Ansprüche weiter umfassend
- Empfangen (100) eines Datensatzes repräsentierend eine Spezifikation der CAB-Vorlage (50),
- Empfangen (200) einer Freigabe von einem Absender (55) des Datensatzes und
- automatisches Bereitstellen (300) des Datensatzes zur Auswahl der CAB-Vorlage (50) durch den Anwender (56).

5. Verfahren nach Anspruch 4 weiter umfassend
- automatisches Abgleichen (400) der Spezifikation mit einem Anforderungskatalog vor dem Bereitstellen des Datensatzes.

6. Verfahren nach Anspruch 5, wobei der Anforderungskatalog rechtliche und/oder technische Mindestvoraussetzungen für einen Einsatz der CAB (1) in einem Servicemobil definiert.

7. Verfahren nach einem der vorstehenden Ansprüche weiter umfassend
- Ermitteln (1200) einer Eingabe eines Anwenders (56) zum Editieren einer durch die CAB-Vorlage (50) bereits definierten Eigenschaft und in Abhängigkeit übriger Eigenschaften und/oder einer Kategorie der CAB-Vorlage (50)
- Darstellen (1300) von Repräsentationen verfügbarer unterschiedlicher Ausgestaltungen der bereits definierten Eigenschaft zur Auswahl durch den Anwender (56).

8. Verfahren nach einem der vorstehenden Ansprüche weiter umfassend
- Ermitteln (500) einer Eingabe des Anwenders (56) zur Auswahl einer verfügbaren Dienstleistung (D1-D8), und in Abhängigkeit der Dienstleistung (D1-D8)
- Darstellen (600) von Repräsentationen verfügbarer unterschiedlicher CAB-Vorlagen (50, 51, 52), welche sämtlich für die Erbringung der vom Anwender (56) anzubietenden Dienstleistung (D1-D8) vorgesehen sind.

9. Verfahren nach einem der vorstehenden Ansprüche, wobei die CAB-Vorlage (50)
- eine vollständige datentechnische Spezifikation der CAB und/oder
- eine Teil-Spezifikation und/oder
- datentechnische 3D-Modelle
umfasst.

10. Verfahren nach einem der vorstehenden Ansprüche weiter umfassend
- Ermitteln (900) einer Eingabe eines Anwenders (56) zur Auswahl eines vordefinierten Verkehrsraumes, insbesondere einer vordefinierten Region, bevorzugt eines Staates, als zukünftiger Einsatzort der CAB (1), und in Abhängigkeit der Eingabe
- automatisches Ermitteln (1000), dass
- eine Ausstattungsvariante und/oder
- ein Parameter einer Ausstattung der CAB (1) mit einer Anforderung aufgrund des Verkehrsraumes nicht konform ist und
- automatisches Anfordern (1100) einer alternativen Definition der Ausstattungsvariante bzw. des Parameters.

11. Verfahren nach einem der vorstehenden Ansprüche, wobei das Ermitteln der Eingabe des Anwenders (56) rechnergestützt erfolgt.

12. Vorrichtung zur Konfiguration einer dienstleistungsspezifisch ausgestalteten Kabine (1), nachfolgend "CAB (1)" genannt, für ein temporär aus einer Fahrlafette (10) und der CAB (1) zusammengesetztes Servicemobil zur Erbringung einer Dienstleistung (D1-D8) während der Fahrt umfassend:
- einen Dateneingang (16),
- eine Auswerteeinheit (15) und
- einen Datenausgang (17), wobei die Auswerteeinheit (15) eingerichtet ist,
- mittels des Dateneingangs (16) eine Eingabe eines Anwenders (56) zur Auswahl einer CAB-Vorlage (50) zu ermitteln, und
- mittels des Datenausgangs (17) im Ansprechen auf die Eingabe die CAB-Vorlage (50) automatisch als Basis einer weiteren Konfiguration der CAB (1) zu definieren.

13. Vorrichtung nach Anspruch 12, welche eingerichtet ist, ein Verfahren nach einem der vorstehenden Ansprüche 1 bis 11 auszuführen.

14. Computerprogrammprodukt umfassend Instruktionen, welche, wenn Sie auf einer Auswerteeinheit (15) einer Vorrichtung gemäß einem der Ansprüche 12 oder 13 ausgeführt werden, die Auswerteeinheit (15) veranlassen, die Schritte eines Verfahrens nach einem der Ansprüche 1 bis 11 durchzuführen.

15. Signalfolge repräsentierend Instruktionen, welche, wenn Sie auf einer Auswerteeinheit (15) einer Vorrichtung gemäß einem der Ansprüche 12 oder 13 ausgeführt werden, die Auswerteeinheit (15) veranlassen, die Schritte eines Verfahrens nach einem der Ansprüche 1 bis 11 durchzuführen.
